# EUROPEAN PATENT APPLICATION

(11) **EP 4 836 422 A1**
(43) Date of publication of application: **04.11.2026**
(21) Application number: 25221346.7
(22) Date of filing: 08.12.2025
(51) Int. Cl.: H04N 21/2347, H04N 21/2389

(54) **SIGNALING OF LOCATIONS OF PROTECTED DATA IN ENCODED BITSTREAM**

(30) Priority: 29.04.2025 WO PCT/CN2025/091945; 13.05.2025 US 202519207154
(71) Applicant: Beijing YoJaJa Software Technology Development Co., Ltd., Beijing 100015 (CN)
(72) Inventor: Meng, Xuewei, Beijing (CN); Zhang, Wenhao, Beijing (CN)
(74) Representative: Müller-Boré & Partner Patentanwälte PartG mbB

(57) **Abstract**

In some embodiments, a method receives an encoded bitstream. The information that is determined for the encoded bitstream was determined during encoding of the bitstream. The information follows a syntax to describe protected data of the encoded bitstream. The method uses the information to determine a set of locations of the encoded bitstream to encrypt based on the syntax. Selectively encrypting a set of first portions of the encoded bitstream that correspond to the protected data based on the set of locations to form an encrypted bitstream. A set of second portions of the encoded bitstream that correspond to clear data is not encrypted. The method outputs the encrypted bitstream.

## Description

### CROSS REFERENCE TO RELATED APPLICATIONS

This application is a continuation application and, pursuant to 35 U.S.C. § 120, is entitled to and claims the benefit of earlier filed application PCT App. No. PCT/CN2025/091945, filed April 29, 2025, entitled "SIGNALING OF LOCATIONS OF PROTECTED DATA IN ENCODED BITSTREAM", the content of which is incorporated herein by reference in its entirety for all purposes.

### BACKGROUND

In a Digital Rights Management (DRM) based video encoding and transmission system, encoding, packaging, and encrypting the video content prepare the video for secure distribution and adaptive streaming. A challenge of video content encryption lies in identifying the specific bytes that need to be encrypted in the encoded bitstream. Locating these bytes in an encoded bitstream is particularly complex. For example, this requires extensive parsing of the encoded bitstream, often involving bit-by-bit analysis, to accurately determine the positions for encryption. This process significantly limits the efficiency of the overall system.

### BRIEF DESCRIPTION OF THE DRAWINGS

The included drawings are for illustrative purposes and serve only to provide examples of possible structures and operations for the disclosed inventive systems, apparatus, methods, and computer program products. These drawings in no way limit any changes in form and detail that may be made by one skilled in the art without departing from the spirit and scope of the disclosed implementations.
FIG. 1 depicts a simplified system for encoding, packaging, and encrypting a bitstream according to some embodiments.
FIG. 2 depicts a more detailed example of an encoding, packaging, and encryption pipeline according to some embodiments.
FIG. 3 depicts a simplified flowchart of a method for processing a source video to generate an encrypted bitstream according to some embodiments.
FIG. 4A depicts a first type of a category 1 for an encoded bitstream according to some embodiments.
FIG. 4B depicts a second type of a category 2 for an encoded bitstream according to some embodiments.
FIG. 5 depicts a syntax for metadata for the encoder normative syntax for the category 1 bitstream according to some embodiments.
FIG. 6 depicts a syntax for metadata for the encoder normative method for the category 2 bitstream according to some embodiments.
FIG. 7 depicts a syntax for metadata for the second example of the encoder normative syntax for the category 1 bitstream according to some embodiments.
FIG. 8 depicts a syntax for metadata for the second example of the encoder normative method for the category 1 bitstream according to some embodiments.
FIG. 9 depicts a simplified flowchart of a method for encrypting an encoded bitstream according to some embodiments.
FIG. 10 depicts a video streaming system in communication with multiple client devices via one or more communication networks according to one embodiment.
FIG. 11 depicts a diagrammatic view of an apparatus for viewing video content and supplemental content.

### DETAILED DESCRIPTION

Described herein are techniques for an encoding, packaging, and encryption system. In the following description, for purposes of explanation, numerous examples and specific details are set forth to provide a thorough understanding of some embodiments. Some embodiments as defined by the claims may include some or all the features in these examples alone or in combination with other features described below, and may further include modifications and equivalents of the features and concepts described herein.

### Overview

A system uses an encryption-friendly syntax design to improve a parsing process to determine protected data to encrypt in an encoded bitstream. The syntax reduces the complexity of and need for a bit-by-bit parsing process of the encoded bitstream. Previously, an input source video is first encoded/compressed into an encoded bitstream. Then, the encoded bitstream is input to a packaging and encryption system. To derive the encrypted bitstream, a parsing system performs a complex bit-by-bit parsing of the encoded bitstream to identify locations of the protected bytes in the encoded bitstream. With the locations of the protected bytes in the encoded bitstream, the encryption system encrypts the locations of the encoded bitstream to generate an encrypted bitstream. In contrast, in the present system, a lightweight parsing of a small amount of information, such as only several bytes of metadata, can be used to determine the locations of the protected data (e.g., protected bytes), which highly improves the overall efficiency of the system.

In some embodiments, an encoder determines a type of data in the bitstream that is being encoded. For example, protected data and clear data may be interspersed in the encoded bitstream differently in different types of bitstreams. The protected data may be bytes of the encoded bitstream that will be encrypted. The clear data may be bytes that will not be encrypted. The encoder derives location information of protected data based on information during the encoding of the content, such as via information in headers that identify a type of data being encoded. Then, the encoder provides the information as metadata that can be used to determine the locations of protected data to the packaging and encryption system. The metadata may be provided in different ways. For example, the metadata may be provided in the encoded bitstream. Also, the metadata may be provided outside of the encoded bitstream, such as via a separate channel. Then, the packaging and encryption system uses the metadata to determine portions of the encoded bitstream to encrypt and not encrypt. For example, the packaging and encryption system encrypts the locations of the protected data and leaves the locations of clear data unencrypted.

### System

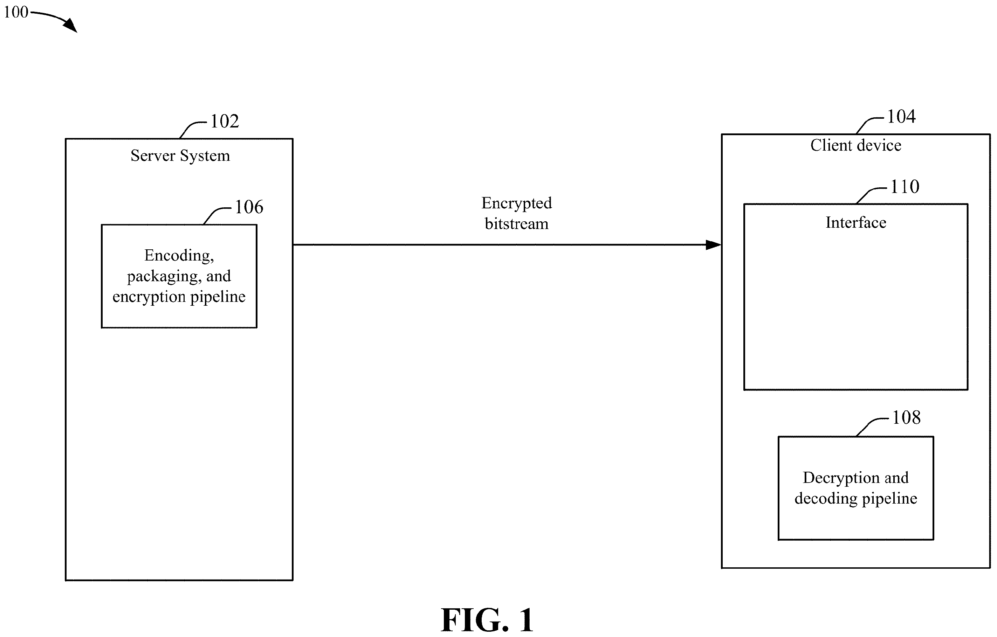

FIG. 1 depicts a simplified system 100 for encoding, packaging, and encrypting a bitstream according to some embodiments. System 100 includes a server system 102 and a client device 104. Server system 102 may deliver an encrypted bitstream for content to client device 104. Client device 104 may decrypt and decode the encrypted bitstream. An encrypted bitstream may be an encoded bitstream that has portions of bytes that are encrypted and portions of bytes that are not encrypted. Then, client device 104 plays back the content in an interface 110. The content may be different types of content, such as video, audio, images, etc. Video may be used for discussion purposes, but other content may be appreciated.

In some embodiments, server system 102 can be implemented using one or more computing devices that interact with client devices 104. In some embodiments, server system 102 may include multiple servers or other computing devices to provide the functionality described herein. Server system 102 may be designed to handle requests for content from multiple client devices and provide encrypted bitstreams in response.

In some embodiments, client device 104 can be a user device that interacts with the server system 102 to request content or other data. Client device 104 may be a computer, mobile phone, smartphone, tablet device, living room device, or other type of device that is capable of communicating with the server system. In some embodiments, client device 104 can be configured to receive and display content delivered by server system 102 on interface 110.

Server system 102 and client device 104 can communicate with each other using a network. In some embodiments, the communication between server system 102 and client device 104 can be secured using encryption or other security measures to protect the data being transmitted. Server system 102 and client device 104 can also be configured to use different protocols or technologies to communicate with each other.

Server system 102 includes an encoding, packaging, and encryption pipeline 106 that performs encoding, packaging, and encryption. Encoding is the process of compressing raw video content into a specific codec format, such as High Efficiency Video Coding (HEVC) H.264 or H.265, Audio Video 1 (AV1), etc., to reduce file size while maintaining quality. By encoding the video at multiple bitrates and resolutions, system 100 can support adaptive bitrate streaming (ABR), allowing viewers to experience smooth playback regardless of network conditions by automatically adjusting the quality to fit the available bandwidth.

After encoding, the video needs to be packaged into segments and wrapped in a suitable streaming protocol format, such as DASH (Dynamic Adaptive Streaming over HTTP) or HLS (HTTP Live Streaming). This packaging process divides the video into smaller chunks, which are then delivered progressively over the network. Packaging also includes integrating digital rights management (DRM) metadata, which links the video content to encryption keys, ensuring that only authorized users with the decryption key can view the content.

Digital rights management systems implement content protection by encrypting video streams and controlling access rights. The encryption methods may rely on Advanced Encryption Standard (AES) encryption standards to ensure the security of the encoded bitstream, with key exchange protocols securing access to decryption keys. Each DRM provider typically manages licenses and enforces policies to limit copying, screen recording, and unauthorized distribution. DRM-protected packaging is used in applications such as Over-the-Top (OTT) media, Video-on-Demand (VoD), and subscription-based streaming services.

Decryption and decoding pipeline 108 receives the encrypted bitstream and decrypts the protected bytes to form the encoded bitstream. Then, decryption and decoding pipeline 108 can decode the encoded bitstream, and the content (e.g., video) can be played back in interface 110.

The following will now describe encoding, packaging, and encryption pipeline 106 in more detail.

### Encoding, Packaging, and Encryption Pipeline

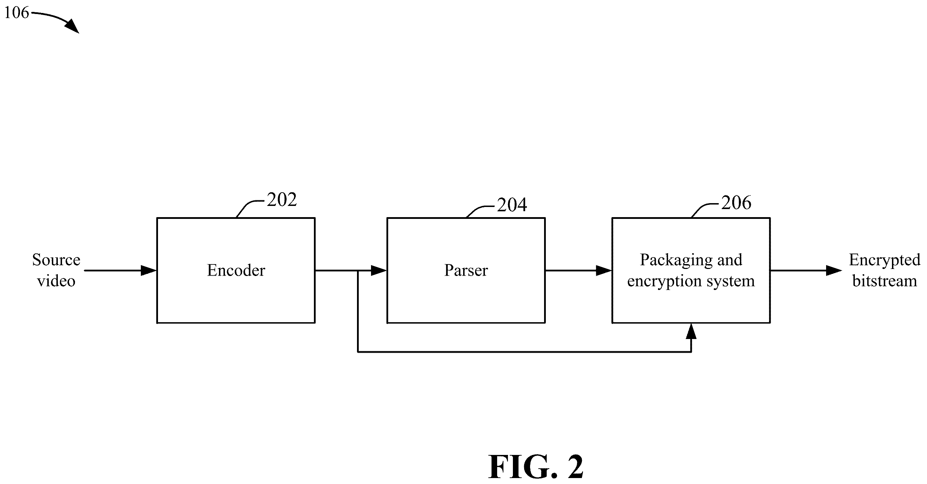

FIG. 2 depicts a more detailed example of encoding, packaging, and encryption pipeline 106 according to some embodiments. Encoding, packaging, and encryption pipeline 106 includes an encoder 202, a parser 204, and a packaging and encryption system 206.

Encoder 202 receives content, such as a source video, audio, or other content. A source video will be used as an example for discussion purposes. Encoder 202 encodes the source video into an encoded bitstream. Encoder 202 can use various techniques, such as compression, to reduce the size of the source video. Encoder 202 may also determine metadata or other information about the bitstream, such as information that can be used to determine the locations for protected data. The metadata may be added to the encoded bitstream, or added in a separate stream, based on a signaling method that will be used. The metadata is added based on a syntax. The syntax refers to the rules that govern the structure of the values of the metadata that is used to convey the locations of the protected data. Examples of syntaxes are described below.

Parser 204 parses the metadata and determines the locations for the protected data. The parsing does not need to parse every bit of the encoded bitstream. Rather, parser 204 uses the metadata to determine the locations of the protected data. In contrast to parsing the entire encoded bitstream, parser 204 may only need to parse the metadata, which may be only several bytes, which highly improves the overall efficiency of the system. Alos, the metadata may be located at the beginning of a frame, and parser 204 can parse the metadata from the beginning of a frame to determine the locations of the protected data of the frame, and then skip to the frame. Then, parser 204 passes information for the locations of the protected bytes to packaging and encryption system 206.

Packaging and encryption system 206 packages the encoded bitstream. Packaging involves structuring the encoded video data into a container format that facilitates storage, retrieval, and streaming across devices with varying capabilities. Modern container formats, such as MPEG-DASH (Dynamic Adaptive Streaming over HTTP) and HLS (HTTP Live Streaming), segment video data into small chunks that can be dynamically adjusted according to the network conditions being experienced by client device 104, ensuring smooth playback. The MPEG-4 (MP4) container may be a format that is used due to its compatibility and efficient handling of video, audio, and metadata in a compact structure. These formats enable adaptive bitrate streaming (ABR), where quality automatically adjusts to prevent buffering and interruptions based on available bandwidth.

Fragmented MP4 (fMP4) represents an evolution in the MP4 standard, where the video content is divided into "fragments" that can be incrementally loaded, allowing for seamless adaptive streaming. Used in both MPEG-DASH and HLS, fMP4 supports efficient bitrate switching, allowing end users to experience continuous playback even under fluctuating network conditions. Adaptive streaming technologies implement algorithms to determine the optimal fragment quality based on the network's bandwidth, ensuring an optimal balance between quality and continuity. Other protocols may also be used for packaging.

Packaging and encryption system 206 may encrypt the protected data of the fragments. Different encryption specifications may be used. Common Encryption (CENC) is an industry-standard encryption specification that enables interoperability across different DRM systems. Common Encryption allows content providers to encrypt content once and distribute it through multiple DRM systems, eliminating the need for multiple encryption versions. This interoperability facilitates a streamlined content distribution process while maintaining robust security. Common Encryption, paired with fragmented MP4 packaging, may be used for delivering encrypted video in adaptive streaming formats, especially in multi-platform streaming scenarios.

The locations of the protected data are needed to determine where to encrypt. The locations may be byte offsets in the encoded bitstream or other location information. Packaging and encryption system 206 uses the locations to encrypt the protected data while leaving the clear data unencrypted to form an encrypted bitstream. Server system 102 sends the encrypted bitstream to client device 104. Advanced HTTP protocols, such as HTTP/2 and HTTP/3, can be used to improve the transport efficiency of packaged video content. These protocols enable features such as multiplexing, header compression, and faster data transmission, significantly reducing latency. In adaptive streaming, these advancements support faster segment loading and better responsiveness, particularly under congested network conditions, ensuring a consistent viewer experience.

Low-latency streaming protocols, including Low-Latency HLS (LL-HLS) and Low-Latency DASH (LL-DASH), can be used to address the delays traditionally associated with live streaming. Just-in-Time (JIT) packaging further enhances efficiency by packaging content on-the-fly based on the viewer's device and network requirements. These advancements may be used for applications where near-real-time playback is crucial, such as sports broadcasts and interactive content, ensuring minimal delay between content generation and end-user playback.

The process of generating the encoded bitstream and encrypted bitstream will be described in more detail.

### Method Flow

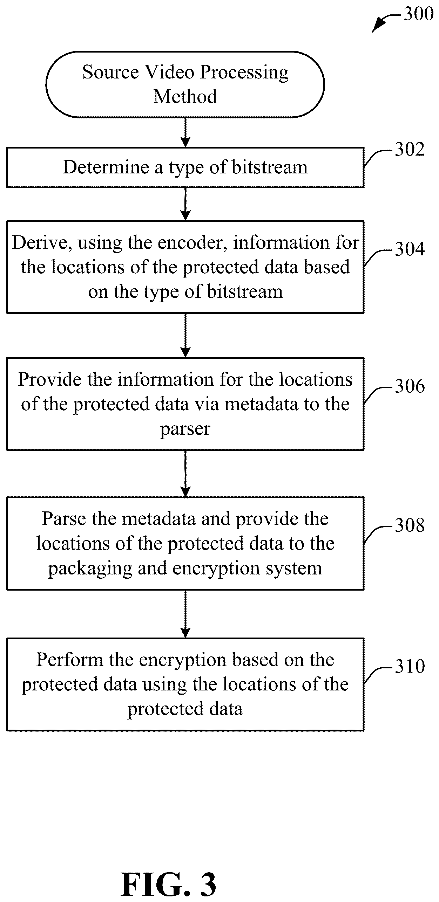

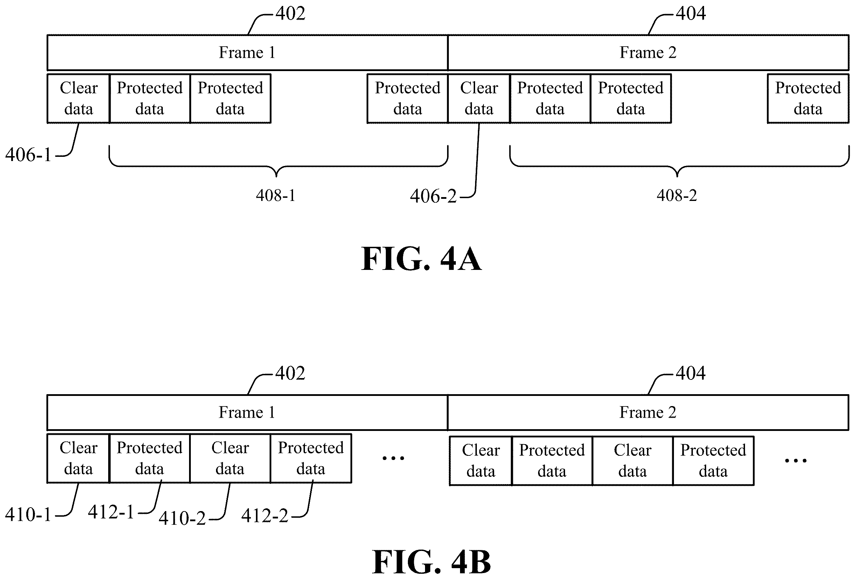

FIG. 3 depicts a simplified flowchart 300 of a method for processing a source video to generate an encrypted bitstream according to some embodiments. At 302, encoder 202 determines a type of bitstream that will be encrypted. For example, there may be different types of bitstreams that have different patterns of protected data and clear data. The different types of patterns will be described below in FIGs. 4 to 8.

At 304, encoder 202 derives information for the locations of the protected data based on the type of a bitstream. For example, encoder 202 may determine the locations of the protected data during the encoding process using context information, such as information from a header that describes the type of information in the bitstream (e.g., each frame). Other context information may also be used, such as frame types, etc.

At 306, encoder 202 provides information for the locations of the protected data to parser 204. As will be discussed in more detail below, the metadata for the protected data may be provided in different syntaxes and using different signaling methods. For example, for signaling methods, the protected data may be provided in the encoded bitstream or via a metadata side channel. The different syntaxes will be described in more detail below.

At 308, parser 204 parses the metadata and determines the locations of the protected data. The parsing of the metadata to determine the locations may differ depending on the syntax used, and will be described in more detail below. Parser 204 can provide the locations to packaging and encryption system 206.

At 310, packaging and encryption system 206 performs the encryption of the protected data based on the locations. For example, packaging and encryption system 206 encrypts the bytes of the encoded bitstream that correspond to the locations of the protected data, and leaves the bytes corresponding to the clear data unencrypted.

### Derivation of the Location of the Protected Bytes

In some embodiments, there may be two types of bitstreams that correspond to different locations of protected bytes, as shown in FIG. 4A and FIG 4B. The two types are shown for illustrative purposes and other types may be appreciated.

FIG. 4A depicts a first type of a category 1 for an encoded bitstream according to some embodiments. In this encoded bitstream, at 402, a frame 1 is shown, and, at 404, a frame 2 is shown. The frame may be an image of the video. The encoded bitstream may include clear data and protected data. The clear data should not be encrypted and the protected data should be encrypted. The different types of categories may have different patterns of clear data and protected data. As will be described later, the syntax may be used to describe the pattern. In category 1, in a frame, there is only one fragment of consecutive instance of clear data (e.g., consecutive bytes), and one or more fragments of consecutive bytes of protected data. For example, for frame 1, at 406-1, clear data is included. Then, at 408-1, one or more fragments of protected data is included. The fragments of protected data may not include any interspersed clear data. In some embodiments, a single fragment of protected data may be included, or consecutive multiple fragments of protected data are included. This pattern starts over again in frame 2. For example, for frame 2, at 406-2, clear data is included. Then, at 408-2, one or more instances of protected data is included. An Advance Video Coding (AVC) bitstream (with one slice in the frame), a High Efficiency Video Coding (HEVC) bitstream (with one slice in the frame), and the Audio Video 1 (AV1) bitstream (with one tile in the frame) can be classified into category 1.

FIG. 4B depicts a second type of a category 2 for an encoded bitstream according to some embodiments. In this encoded bitstream, at 402, a frame 1 is shown, and, at 404, a frame 2 is shown. In a frame of category 2, there are multiple fragments of clear data and fragments of protected data. The clear data and protected data fragments may alternate or follow other patterns. One difference in category 2 is that this bitstream includes multiple clear data fragments compared to one clear data fragment in category 1. For example, for frame 1, at 410-1, clear data is included. Then, at 412-1, protected data is included. This pattern starts over again with clear data at 410-2 and protected data at 412-2. This pattern may continue until the end of the frame, which may end with clear data and the protected data. Then, for frame 2, clear data, protected data, clear data, protected data, etc. is included in the same pattern as frame 1. The AVC bitstream (with multiple slices in one frame), the HEVC bitstream (with multiple slices in one frame), and the AV1 bitstream (with multiple tiles in one frame) can be classified into category 2.

Packaging and encryption system 206 needs to identify the locations of all the protected and clear data fragments, which may be complicated if bit by bit parsing is performed. The following uses a syntax to describe the locations to improve the efficiency of determining the locations.

### Metadata

The following will describe different syntaxes of metadata that are used for the different categories. In some embodiments, two signaling methods may be used, an encoder normative method and an encoder non-normative method. In an encoder normative method, encoder 202 adds metadata for the syntaxes in the encoded bitstream, such as in a frame (e.g., in a first fragment at the beginning of frame). Encoder 202 may follow a video codec standard to insert the metadata into the encoded bitstream. In an encoder non-normative method, encoder 202 provides the metadata for the locations of the protected data or the clear data via a separate channel, such as via sidecar metadata, or customized supplemental information. The separate channel may be separate from the encoded bitstream in that the metadata is not inserted in the bytes of the encoded bitstream based on an encoding protocol or specification. This method does not need to modify the video codec standard, and can be used for the solutions that have full control of both encoder 202 and packaging and encryption system 206. It is noted that some systems may not encode, package, and encrypt source content. Rather, some systems may only encode the source content. Also, some systems may only receive the encoded bitstream. In this case, it may not be possible to pass the metadata between separate systems via a separate channel.

Different examples of syntaxes may be used. Two examples will be described, but others may be appreciated. The following will describe using the encoder normative method. However, the same syntax may be used in the encoder non-normative method with the metadata being sent in a separate channel instead of being inserted in the encoded bitstream. A first example of the syntax for a bitstream is shown in Table 1:

**Table 1**

| |
|---|
| Entry_point{ |
| Num_of_entries |
| For i in Num_of_entries { |
| Entry_type |
| Entry_size |
| } |
| } |

Encoder 202 inserts metadata based on the syntax shown in Table 1 in a position in the frame, such as in the first clear data fragment for each frame, but other positions may be used. By inserting the metadata in the first clear data fragment, less data may need to be parsed to find the metadata. After reading the metadata, parser 204 may move to the next frame and not have to parse the rest of the frame. In Table 1, the Num_of_entries is an integer (no less than 0) that indicates the number of entries. The Entry_type may be a Boolean (0 or 1) that indicates the type of the entry, e.g., clear data or protected data. The Entry_size (larger than 0) is a value that is used to determine the location of the entry, such as the number of bytes of the current entry. For example, the entry size may be used to determine a number of bytes to encrypt or not encrypt. Also, the entry size may be byte offsets or other location information.

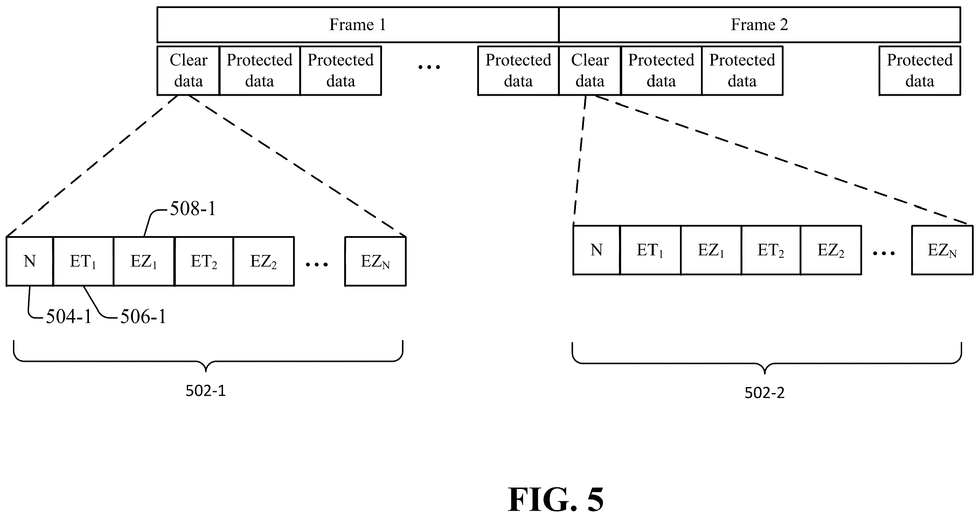

This syntax can be used for category 1 and category 2. FIG. 5 depicts a syntax for metadata for the encoder normative syntax for category 1 bitstream according to some embodiments. In FIG. 5, at 502-1 for a frame 1 and at 502-2 for a frame 2, metadata for the N entries, ET entries, and EZ entries correspond to the Num_of_entries, Entry_type, and Entry_size, respectively, in the syntax in Table 1. An entry may be for a fragment of data in the frame, such as clear data or protected data.

Here, a portion of the clear data in the beginning of each frame may include the metadata. At 504-1, an N entry is included. Then, an ET₁ entry is included at 506-1 and an EZ₁ entry is included at 508-1. For Frame 1, encoder 202 may determine the overall size of Frame 1 (Frame_size). Then, encoder 202 may set the value of N to 1, which means one entry is included. The value of ET₁ is clear type (e.g., the Boolean value of 0 can be used to represent clear data), and the value of EZ₁ is the size of the clear data. Parser 204 can determine the location of the protected data, such as the size of protected data is determined using Frame_size - EZ₁. For example, if the frame size is 1000 bytes and the clear data is 100 bytes. The protected data is 1000 bytes-100 bytes = 900 bytes. The location of the clear data may be 0-99 bytes and the location of the protected data may be 100-999 bytes. With the locations, packaging and encryption system 206 can conduct the encryption of the protected data.

In other embodiments, instead of just inserting values for one entry, encoder 202 may insert the value of ET₂ is a protected type (e.g., the Boolean value of 1 can be used to represent protected data), and the value of EZ₂ is the size of the protected data. Also, there may be one or more instances of ET and EZ values depending on the number of protected data fragments in frame 1. For example, another protected data fragment may include a protected type (e.g., the Boolean value of 1 can be used to represent protected data) in ET₃, and the value of EZ₃ is the size of the protected data. The value of N may be increased based on the number of entries that are included in the metadata. Frame 2 includes another instance of metadata describing the clear data and the protected data in frame 2.

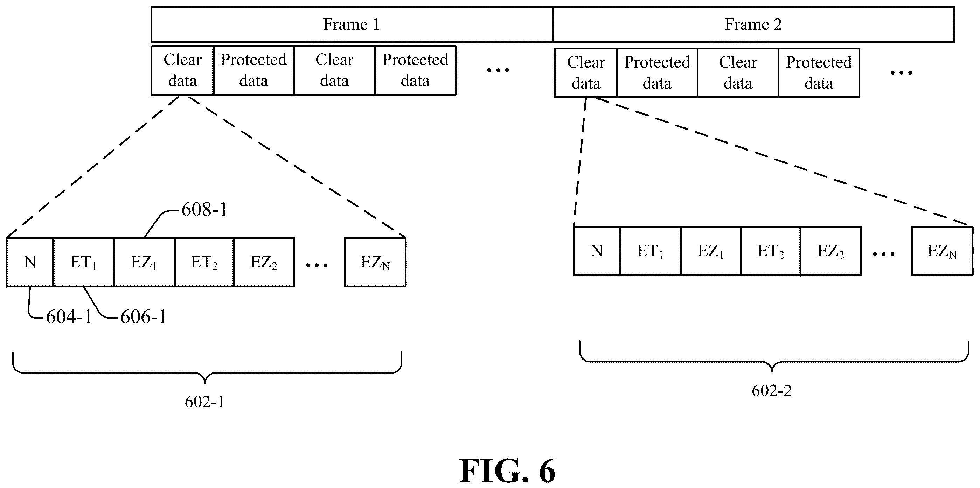

FIG. 6 depicts a syntax for metadata for the encoder normative method for a category 2 bitstream according to some embodiments. In FIG. 6, at 602-1 in frame 1 and at 602-2 in frame 2, metadata for the N entries, ET entries, and EZ entries correspond to the Num_of_entries, Entry_type, and Entry_size, respectively, in the syntax. Here, a portion of the clear data in the beginning of each frame may include the metadata. At 604-1, an N entry is included. Then, an ET₁ entry is included at 606-1 and an EZ₁ entry is included at 608-1. These entries may repeat. For Frame 1, encoder 202 may determine the overall size of Frame 1 (Frame_size). Then, encoder 202 sets the value of N to K-1. N is set to K-1 because the frame size can be used to determine the size of the last entry. However, all entries may be included and N is set to K. The value of ET₁ is clear type (e.g., the Boolean value of 0 can be used to represent clear data), and the value of EZ₁ is the size of the clear data. Encoder 202 can determine the value of ET₂ is a protected type (e.g., the Boolean value of 1 can be used to represent protected data), and the value of EZ₂ is the size of the protected data. There may be one or more instances of ET and EZ values depending on the number of clear data fragments and protected data fragments in frame 1. For example, another clear data fragment may include a clear type (e.g., the Boolean value of 0 can be used to represent clear data) in ET₃, and the value of EZ₃ is the size of the clear data. Another protected data fragment may include a protected type (e.g., the Boolean value of 1 can be used to represent protected data) in ET₄, and the value of EZ₄ is the size of the protected data. Frame 2 includes another instance of metadata describing the clear data and the protected data in frame 2.

With the inserted metadata, parser 204 can directly derive the location of clear data and protected data after parsing the inserted metadata for the syntax using the entry types and sizes. For example, parser 204 uses the sizes to determine the byte offsets for each clear data fragment and protected data fragment. If parser 204 inserts the inserted metadata at the beginning of first instance of clear data, parser 204 does not need to parse any other bits of the frame until the next frame. Rather, parser 204 can jump to the frame after reading the metadata and determining the locations of the clear data or the protected data.

A second example of the syntax for a bitstream is shown in Table 2:

**Table 2**

| |
|---|
| Entry_point { |
| Num_of_entries |
| For i in Num_of_entries { |
| Entry_size |
| } |
| } |

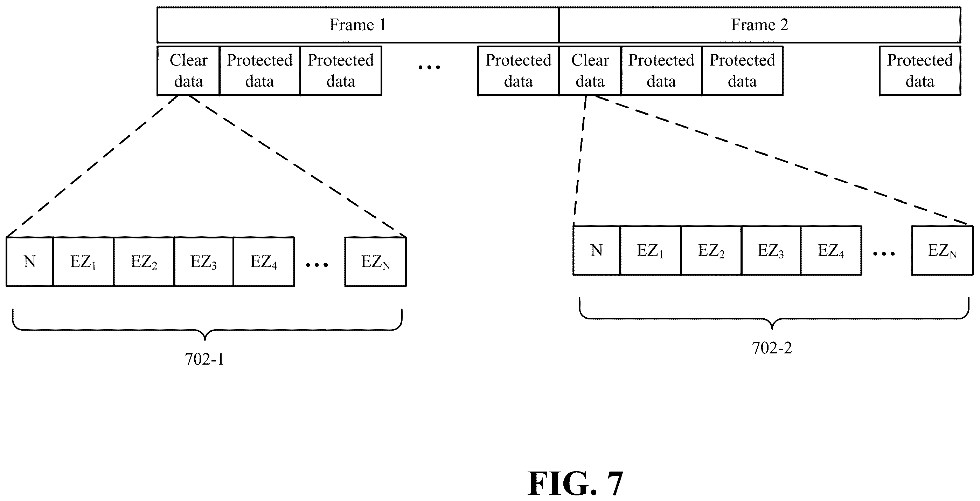

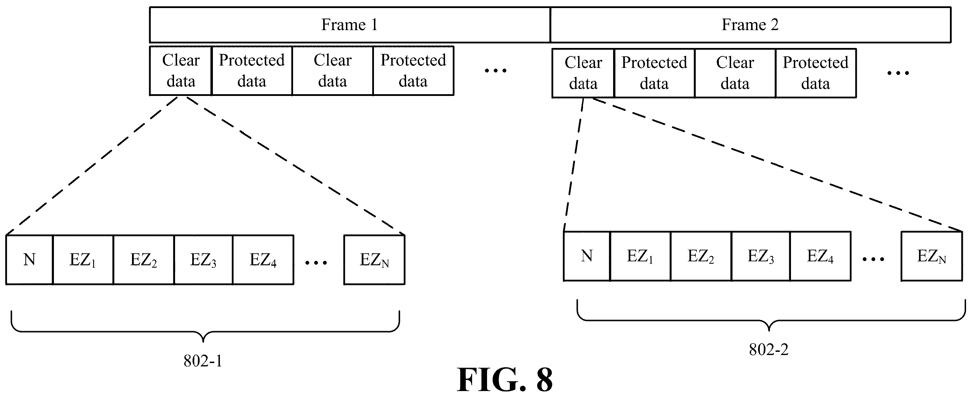

In Table 2, the Num_of_entries (No less than 0) is an integer that indicates the number of entries. The Entry_size (No less than 0) is the number of bytes of the current entry. This solution can be used for categories 1 and 2, as shown in FIG. 7 and FIG. 8, respectively. In FIG. 7 and FIG. 8, the N and EZ entries correspond to the Num_of_entries and Entry_size, respectively.

The difference between the first syntax and the second syntax is that the Entry_type that corresponds to the Entry_size in the second syntax is determined by a default pattern. A first pattern may be clear data, protected data, clear data, protected data, etc. A second pattern may be protected data, clear data, protected data, clear data, etc. A third pattern may be clear data, protected data, protected data, protected data. Packaging and encryption system 206 does not need to know the specific entry type with Entry type syntax. Rather, the Entry_type may be determined based on the default pattern.

FIG. 7 depicts a syntax for metadata for the second example of the encoder normative syntax for a category 1 bitstream according to some embodiments. In FIG. 7, at 702-1 in a first frame and at 702-2 in a second frame, metadata for the N entries and EZ entries correspond to the Num_of_entries and Entry_size, respectively, in the syntax. In some embodiments, the default Entry type is clear data, protected data, clear data, protected data, etc. If the frame size is known at the beginning, the value of N is 1, and the value of EZ₁ is the size of the clear data. If the frame size is unknown, the value of N is 2. The values of EZ₁ and EZ₂ correspond to the size of the clear data and the protected data, respectively. There may be no more entries after EZ₂ if there are no more protected data entries. If there are more protected data entries, then the EZ values that correspond to the clear data entries may be zero because there are no more clear data entries in category 1 for the frame. However, alternating EZ entries, which correspond to the protected data, correspond to the size of the protected data. The value of N may be increased in this case.

In some embodiments, the default Entry_type is protected data, clear data, protected data, clear data, etc. If the frame size is known at the beginning, the value of N is 2, and the value of EZ₁ is 0 because the first entry is clear data so the size of protected data is zero here. The value of EZ₂ is the size of the clear data. The frame size may be used to determine the size of the protected data as described above. If the frame size is unknown, the value of N may be 3. The value of EZ₁ is 0, and the values of EZ₂ and EZ₃ correspond to the size of the clear data and the protected data, respectively. If there are more protected data entries, then the EZ values that correspond to the clear data entries may be zero because there are no more clear data entries in category 1 for the frame. However, alternating EZ entries, which correspond to the protected data, correspond to the size of the protected data. The value of N may also be increased.

FIG. 8 depicts a syntax for metadata for the second example of the encoder normative method for a category 2 bitstream according to some embodiments. In FIG. 8, at 802-1 in a frame 1 and 802-2 in a frame 2, metadata for the N entries and EZ entries correspond to the Num_of_entries and Entry_size, respectively, in the syntax. In some embodiments, the default Entry_type is the pattern of clear data, protected data, clear data, protected data, etc. If the frame size is known at the beginning, and there are K fragments (including clear and protected data), the value of N is K - 1. The EZ₁ entry is the size of the first clear data entry in the frame. The value of the EZ₂ entry is the size of the first protected data in the frame. Subsequent entries are the sizes of the clear data entries and the protected data entries until the last entry, which may be determined based on the frame size and the size of the other entries. If the frame is unknown, the value of N is K. All sizes for the clear and protected data entries are included in the EZ values that alternate between the sizes for the clear data entries and the protected data entries.

In some embodiments, the default Entry_type is the pattern of protected data, clear data, protected data, clear data, etc. If the frame size is known at the beginning, and there are K fragments (including clear data and protected data), the value of N is K. The value of the first EZ₁ entry is 0 because the first entry is clear data so the size of protected data is zero here. The value of the EZ₂ entry is the size of the first clear data in the frame. The value of the EZ₃ entry is the size of the first protected data in the frame. The value of N is K because the pattern starts with a protected data entry, which is zero. If the frame is unknown, the N is K + 1. The extra entry is needed because the pattern starts with a protected data entry, which is zero. If there are more clear and protected data entries after the first clear data entry and the first protected data entry, then the EZ values alternate between the sizes for the protected data entries and the clear data entries after the EZ₁ entry, the EZ₂ entry, and the EZ₃ entry.

In some embodiments, the default Entry_type is the pattern of clear data, protected data, protected data, ..., protected data, etc. If the frame size is known at the beginning, and there are K fragments (including clear and protected data), the value of N is K - 1. The EZ₁ entry is the size of the first clear data entry in the frame. The value of the EZ₂ entry is the size of the first protected data in the frame. Subsequent entries are the sizes of any protected data entries until the last entry, which may be determined based on the frame size and the size of the other entries. If the frame is unknown, the value of N is K. All sizes for the clear data and protected data entries are included in the EZ values that alternate between the sizes for the clear data entries and the protected data entries.

### Encryption Process

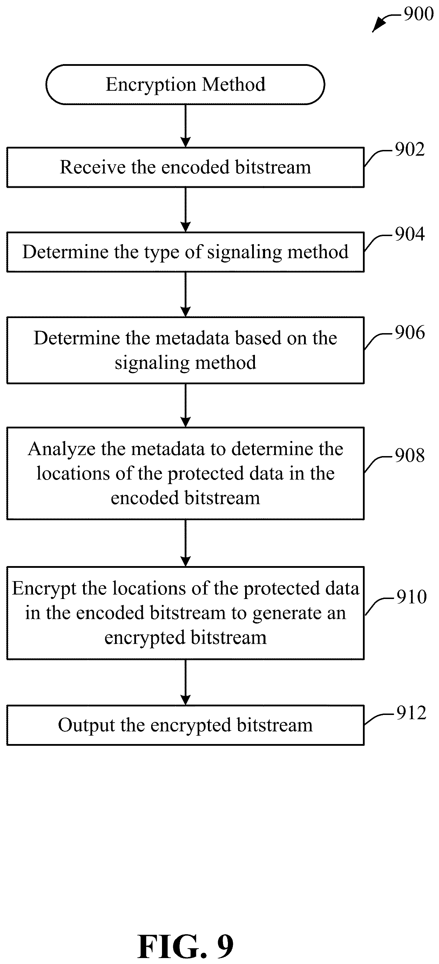

FIG. 9 depicts a simplified flowchart 900 of a method for encrypting an encoded bitstream according to some embodiments. At 902, parser 204 receives the encoded bitstream. In some embodiments, packaging and encryption system 206 receives the encoded bitstream from encoder 202, which may be part of the same pipeline, or may be from a separate pipe pipeline.

At 904, parser 204 determines the type of signaling method that is being used. For example, packaging and encryption system 206 determines which of the above described signaling methods was used to convey the metadata for the protected data of the encoded bitstream. In some embodiments, a setting may be set at packaging and encryption system 206 to indicate the signaling method that was used. Also, information in the encoded stream may indicate the signaling method that was used. Alternatively, information may be sent via a separate channel that indicates the signaling method that was used.

At 906, parser 204 determines the metadata based on the signaling method. For example, the metadata may be included in the encoded bitstream or be transmitted via a separate channel.

At 908, parser 204 analyzes the metadata to determine the locations of the protected data in the encoded bitstream. The locations may be determined differently based on the syntax that was used and the type of bitstream. In some embodiments, sizes of the clear data and the protected data in the frames of the source video are determined.

At 910, packaging and encryption system 206 encrypts the locations of the protected data in the encoder bitstream to generate an encrypted bitstream. The portions of clear data are not encrypted. In some embodiments, packaging and encryption system 206 may use the sizes and entry types to encrypt portions of the encoded bitstream. For example, for the clear data, packaging and encryption system 206 does not encrypt a size of the clear data. Then, for the protected data, packaging and encryption system 206 encrypts a size of the protected data. This process may be performed for the entire frame.

A 912, packaging and encryption system 206 outputs the encrypted bitstream. The encrypted bitstream may be sent to client device 104. Server system 102 may deliver the encrypted bitstream to client device 104. Client device 104 may decrypt the encrypted portions of the encrypted bitstream. The encrypted bitstream may be an encoded bitstream that has portions of bytes that are encrypted and portions of bytes that are not encrypted. Client device 104 decodes the encoded bitstream after decryption. Then, client device 104 plays back the content in an interface 110.

### Example

The following describes a method of determining locations of clear data and protected data. In the AV1 video coding format, Open Bitstream Units (OBUs), which are grouped into Temporal Units (TU), are the fundamental structures used to package different elements of video data. Each OBU type in an AV1 bitstream serves a specific purpose and is designed to carry distinct types of information. OBUs are made of a 1 or 2-byte header, identifying in particular the type of OBU, followed by an optional length field and by an optional payload, whose presence and content depend on the OBU type. Depending on its type, an OBU can carry configuration information, metadata, or coded video data. In some embodiments, the protected data is in FrameOBU to TileGroup OBU. Encoder 202 may parse the sequence header OBU and frameheader OBU to derive the location of protected data in the frame.

Different constraints may be applied to determine protected data. In some embodiments, within protected data, the following constraints apply:
- Protected data shall be exactly spanned by one or more contiguous subsamples.
- All OBU Headers and associated obu_size fields shall be unprotected.
- Temporal Delimiter OBUs, Sequence Header OBUs, Frame Header OBUs (including within a Frame OBU), Redundant Frame Header OBUs, and Padding OBUs shall be clear.
- Metadata OBUs shall not be protected.
- Tile Group OBUs and Frame OBUs shall be protected.
- Only the Tile Data in Tile Group OBUs and Frame OBUs shall be protected.

Based on the constraints mentioned above, the derivation of the protected data is to find the tile data in Tile Group OBUs or Frame OBUs. However, the derivation of these data highly depends on the derivation of Sequences Header OBU and Frame Header OBU/Frame Header. The derivation of the Frame Header requires a very complicated bitstream parsing process, which highly limits the efficiency of the video transmission pipeline. Accordingly, the use of metadata to determine the locations of protected data may be more efficient that bitstream parsing.

### Conclusion

Accordingly, metadata may be used to more efficiently determine locations of protective data. Computing resources are saved by not having to parse every bit of an encoded bitstream. The packaging and encryption process can also be performed faster because the parsing of the bitstream only needs to parse a small amount of information compared to the entire bitstream.

### System

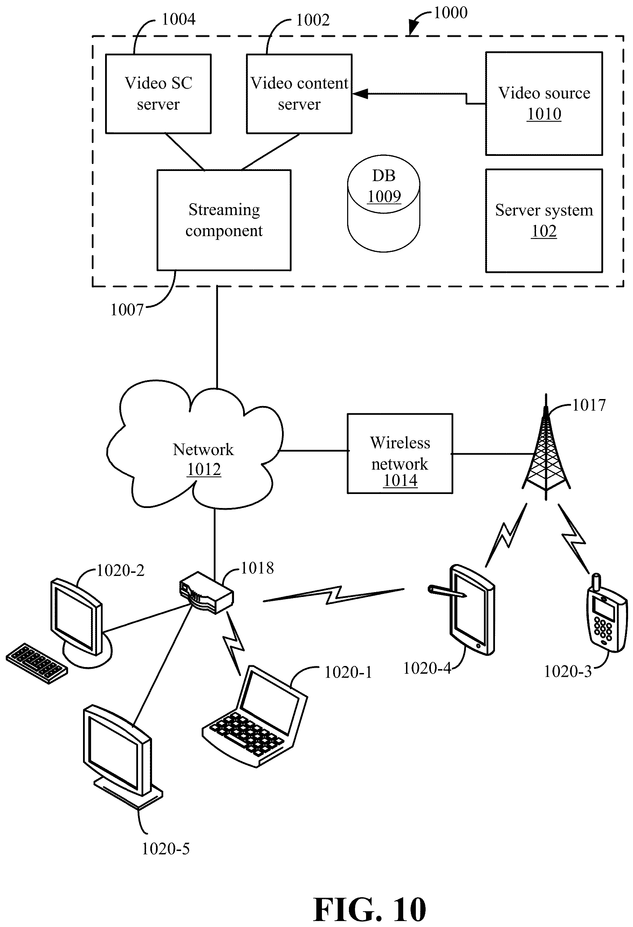

Features and aspects as disclosed herein may be implemented in conjunction with a video streaming system 1000 in communication with multiple client devices via one or more communication networks as shown in FIG. 10. Aspects of the video streaming system 1000 are described merely to provide an example of an application for enabling distribution and delivery of content prepared according to the present disclosure. It should be appreciated that the present technology is not limited to streaming video applications and may be adapted for other applications and delivery mechanisms.

In one embodiment, a media program provider may include a library of media programs. For example, the media programs may be aggregated and provided through a site (e.g., website), application, or browser. A user can access the media program provider's site or application and request media programs. The user may be limited to requesting only media programs offered by the media program provider.

In system 1000, video data may be obtained from one or more sources, for example, from a video source 1010, for use as input to a video content server 1002. The input video data may comprise raw or edited frame-based video data in any suitable digital format, for example, Moving Pictures Experts Group (MPEG)-1, MPEG-2, MPEG-4, VC-1, H.264 / Advanced Video Coding (AVC), High Efficiency Video Coding (HEVC), or other format. In an alternative, a video may be provided in a non-digital format and converted to digital format using a scanner or transcoder. The input video data may comprise video clips or programs of various types, for example, television episodes, motion pictures, and other content produced as primary content of interest to consumers. The video data may also include audio or only audio may be used.

The video streaming system 1000 may include one or more computer servers or modules 1002, 1004, and 1007 distributed over one or more computers. Each server 1002, 1004, 1007 may include, or may be operatively coupled to, one or more data stores 1009, for example databases, indexes, files, or other data structures. A video content server 1002 may access a data store (not shown) of various video segments. The video content server 1002 may serve the video segments as directed by a user interface controller communicating with a client device. As used herein, a video segment refers to a definite portion of frame-based video data, such as may be used in a streaming video session to view a television episode, motion picture, recorded live performance, or other video content.

In some embodiments, a video supplemental content (SC) server 1004 may access a data store of relatively short videos (e.g., 10 second, 30 second, or 60 second supplemental content) configured as advertising for a particular advertiser or message. The supplemental content may be provided for an entity in exchange for payment of some kind or may comprise a promotional message for the system 1000, a public service message, or some other information. The video supplemental content server 1004 may serve the supplemental content segments as directed by a user interface controller (not shown).

The video streaming system 1000 also may include server system 102.

The video streaming system 1000 may further include an integration and streaming component 1007 that integrates video content and supplemental content into a streaming video segment. For example, streaming component 1007 may be a content server or streaming media server. A controller (not shown) may determine the selection or configuration of supplemental content in the streaming video based on any suitable algorithm or process. The video streaming system 1000 may include other modules or units not depicted in FIG. 10, for example, administrative servers, commerce servers, network infrastructure, supplemental content selection engines, and so forth.

The video streaming system 1000 may connect to a data communication network 1012. A data communication network 1012 may comprise a local area network (LAN), a wide area network (WAN), for example, the Internet, a telephone network, a wireless network 1014 (e.g., a wireless cellular telecommunications network (WCS)), or some combination of these or similar networks.

One or more client devices 1020 may be in communication with the video streaming system 1000, via the data communication network 1012, wireless network 1014, or another network. Such client devices may include, for example, one or more laptop computers 1020-1, desktop computers 1020-2, "smart" mobile phones 1020-3, tablet devices 1020-4, network-enabled televisions 1020-5, or combinations thereof, via a router 1018 for a LAN, via a base station 1017 for wireless network 1014, or via some other connection. In operation, such client devices 1020 may send and receive data or instructions to the system 1000, in response to user input received from user input devices or other input. In response, the system 1000 may serve video segments and metadata from the data store 1009 responsive to selection of media programs to the client devices 1020. Client devices 1020 may output the video content from the streaming video segment in a media player using a display screen, projector, or other video output device, and receive user input for interacting with the video content.

Distribution of audio-video data may be implemented from streaming component 1007 to remote client devices over computer networks, telecommunications networks, and combinations of such networks, using various methods, for example streaming. In streaming, a content server streams audio-video data continuously to a media player component operating at least partly on the client device, which may play the audio-video data concurrently with receiving the streaming data from the server. Although streaming is discussed, other methods of delivery may be used. The media player component may initiate play of the video data immediately after receiving an initial portion of the data from the content provider. Traditional streaming techniques use a single provider delivering a stream of data to a set of end users. High bandwidth and processing power may be required to deliver a single stream to a large audience, and the required bandwidth of the provider may increase as the number of end users increases.

Streaming media can be delivered on-demand or live. Streaming enables immediate playback at any point within the file. End-users may skip through the media file to start playback or change playback to any point in the media file. Hence, the end-user does not need to wait for the file to progressively download. Typically, streaming media is delivered from a few dedicated servers having high bandwidth capabilities via a specialized device that accepts requests for video files, and with information about the format, bandwidth, and structure of those files, delivers just the amount of data necessary to play the video, at the rate needed to play it. Streaming media servers may also account for the transmission bandwidth and capabilities of the media player on the destination client. Streaming component 1007 may communicate with client device 1020 using control messages and data messages to adjust to changing network conditions as the video is played. These control messages can include commands for enabling control functions such as fast forward, fast reverse, pausing, or seeking to a particular part of the file at the client.

Since streaming component 1007 transmits video data only as needed and at the rate that is needed, precise control over the number of streams served can be maintained. The viewer will not be able to view high data rate videos over a lower data rate transmission medium. However, streaming media servers (1) provide users random access to the video file, (2) allow monitoring of who is viewing what video programs and how long they are watched (3) use transmission bandwidth more efficiently, since only the amount of data required to support the viewing experience is transmitted, and (4) the video file is not stored in the viewer's computer, but discarded by the media player, thus allowing more control over the content.

Streaming component 1007 may use TCP-based protocols, such as HyperText Transfer Protocol (HTTP) and Real Time Messaging Protocol (RTMP). Streaming component 1007 can also deliver live webcasts and can multicast, which allows more than one client to tune into a single stream, thus saving bandwidth. Streaming media players may not rely on buffering the whole video to provide random access to any point in the media program. Instead, this is accomplished using control messages transmitted from the media player to the streaming media server. Other protocols used for streaming are HTTP live streaming (HLS) or Dynamic Adaptive Streaming over HTTP (DASH). The HLS and DASH protocols deliver video over HTTP via a playlist of small segments that are made available in a variety of bitrates typically from one or more content delivery networks (CDNs). This allows a media player to switch both bitrates and content sources on a segment-by-segment basis. The switching helps compensate for network bandwidth variances and infrastructure failures that may occur during playback of the video.

The delivery of video content by streaming may be accomplished under a variety of models. In one model, the user pays for the viewing of video programs, for example, paying a fee for access to the library of media programs or a portion of restricted media programs, or using a pay-per-view service. In another model widely adopted by broadcast television shortly after its inception, sponsors pay for the presentation of the media program in exchange for the right to present supplemental content during or adjacent to the presentation of the program. In some models, supplemental content is inserted at predetermined times in a video program, which times may be referred to as "slots" or "breaks." With streaming video, the media player may be configured so that the client device cannot play the video without also playing predetermined supplemental content during the designated slots.

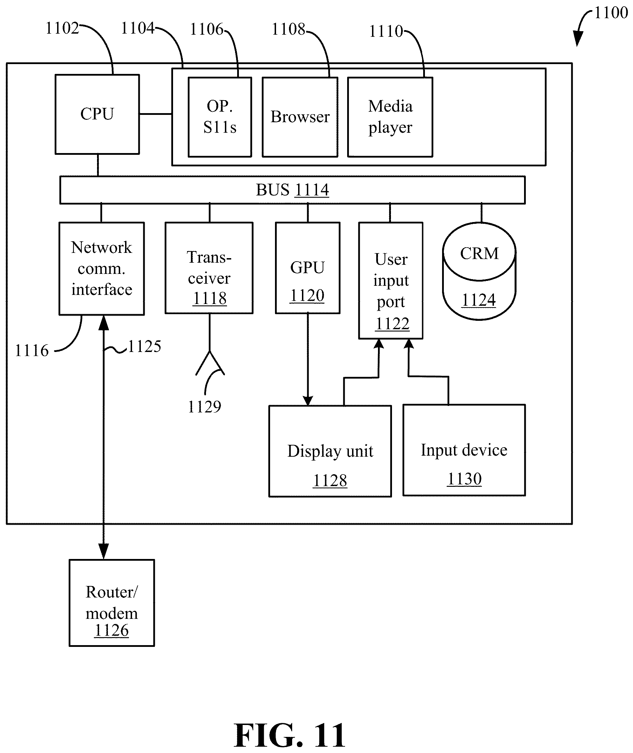

Referring to FIG. 11, a diagrammatic view of an apparatus 1100 for viewing video content and supplemental content is illustrated. In selected embodiments, the apparatus 1100 may include a processor (CPU) 1102 operatively coupled to a processor memory 1104, which holds binary-coded functional modules for execution by the processor 1102. Such functional modules may include an operating system 1106 for handling system functions such as input/output and memory access, a browser 1108 to display web pages, and media player 1110 for playing video. The memory 1104 may hold additional modules not shown in FIG. 11, for example modules for performing other operations described elsewhere herein.

A bus 1114 or other communication components may support communication of information within the apparatus 1100. The processor 1102 may be a specialized or dedicated microprocessor configured or operable to perform particular tasks in accordance with the features and aspects disclosed herein by executing machine-readable software code defining the particular tasks. Processor memory 1104 (e.g., random access memory (RAM) or other dynamic storage device) may be connected to the bus 1114 or directly to the processor 1102, and store information and instructions to be executed by a processor 1102. The memory 1104 may also store temporary variables or other intermediate information during execution of such instructions.

A computer-readable medium in a storage device 1124 may be connected to the bus 1114 and store static information and instructions for the processor 1102; for example, the storage device (CRM) 1124 may store the modules for operating system 1106, browser 1108, and media player 1110 when the apparatus 1100 is powered off, from which the modules may be loaded into the processor memory 1104 when the apparatus 1100 is powered up. The storage device 1124 may include a non-transitory computer-readable storage medium holding information, instructions, or some combination thereof, for example instructions that when executed by the processor 1102, cause the apparatus 1100 to be configured or operable to perform one or more operations of a method as described herein.

A network communication (comm.) interface 1116 may also be connected to the bus 1114. The network communication interface 1116 may provide or support two-way data communication between the apparatus 1100 and one or more external devices, e.g., the streaming system 1000, optionally via a router/modem 1126 and a wired or wireless connection 1125. In the alternative, or in addition, the apparatus 1100 may include a transceiver 1118 connected to an antenna 1129, through which the apparatus 1100 may communicate wirelessly with a base station for a wireless communication system or with the router/modem 1126. In the alternative, the apparatus 1100 may communicate with a video streaming system 1000 via a local area network, virtual private network, or other network. In another alternative, the apparatus 1100 may be incorporated as a module or component of the system 1000 and communicate with other components via the bus 1114 or by some other modality.

The apparatus 1100 may be connected (e.g., via the bus 1114 and graphics processing unit 1120) to a display unit 1128. A display 1128 may include any suitable configuration for displaying information to an operator of the apparatus 1100. For example, a display 1128 may include or utilize a liquid crystal display (LCD), touchscreen LCD (e.g., capacitive display), light emitting diode (LED) display, projector, or other display device to present information to a user of the apparatus 1100 in a visual display.

One or more input devices 1130 (e.g., an alphanumeric keyboard, microphone, keypad, remote controller, game controller, camera, or camera array) may be connected to the bus 1114 via a user input port 1122 to communicate information and commands to the apparatus 1100. In selected embodiments, an input device 1130 may provide or support control over the positioning of a cursor. Such a cursor control device, also called a pointing device, may be configured as a mouse, a trackball, a track pad, touch screen, cursor direction keys or other device for receiving or tracking physical movement and translating the movement into electrical signals indicating cursor movement. The cursor control device may be incorporated into the display unit 1128, for example using a touch sensitive screen. A cursor control device may communicate direction information and command selections to the processor 1102 and control cursor movement on the display 1128. A cursor control device may have two or more degrees of freedom, for example allowing the device to specify cursor positions in a plane or three-dimensional space.

Some embodiments may be implemented in a non-transitory computer-readable storage medium for use by or in connection with the instruction execution system, apparatus, system, or machine. The computer-readable storage medium contains instructions for controlling a computer system to perform a method described by some embodiments. The computer system may include one or more computing devices. The instructions, when executed by one or more computer processors, may be configured or operable to perform that which is described in some embodiments.

As used in the description herein and throughout the claims that follow, "a", "an", and "the" includes plural references unless the context clearly dictates otherwise. Also, as used in the description herein and throughout the claims that follow, the meaning of "in" includes "in" and "on" unless the context clearly dictates otherwise.

The above description illustrates various embodiments along with examples of how aspects of some embodiments may be implemented. The above examples and embodiments should not be deemed to be the only embodiments and are presented to illustrate the flexibility and advantages of some embodiments as defined by the following claims. Based on the above disclosure and the following claims, other arrangements, embodiments, implementations, and equivalents may be employed without departing from the scope hereof as defined by the claims.

## Claims

1. A method comprising:
receiving an encoded bitstream;
determining information for the encoded bitstream that was determined during encoding of content, wherein the information follows a syntax to describe protected data of the encoded bitstream;
using the information to determine a set of locations of the encoded bitstream to encrypt based on the syntax;
selectively encrypting a set of first portions of the encoded bitstream that correspond to the protected data based on the set of locations to form an encrypted bitstream, wherein a set of second portions of the encoded bitstream that correspond to clear data is not encrypted; and
outputting the encrypted bitstream.

2. The method of claim 1, further comprising:
encoding the content to generate the encoded bitstream, wherein the information for the encoded bitstream is determined during the encoding.

3. The method of claim 1 or 2, wherein the information for the encoded bitstream is inserted in the encoded bitstream; and/or
wherein the information for the encoded bitstream is inserted in a first clear data fragment in the encoded bitstream; and/or
wherein the information for the encoded bitstream is received separately from the encoded bitstream.

4. The method of any one of the preceding claims, wherein using the information to determine the set of locations comprises:
determining a number of entries in the information;
for each entry:
determining an entry type that indicates whether the entry is for the protected data or the clear data; and
determining an entry size that is used to determine a location of the protected data or the clear data.

5. The method of claim 4, wherein the entry size is used to determine a size of the protected data or the clear data; and/or
wherein the entry size is used to determine a byte offsets of the protected data or the clear data.

6. The method of claim 4 or 5, wherein:
the entry type for an entry indicates the clear data is in a first location in a frame,
the entry type for one or more entries indicates the protected data is in one or more second locations in the frame.

7. The method of any one of claims 4 to 6, wherein:
the entry type for a first plurality of entries indicates the clear data is in a plurality of first locations in a frame,
the entry type for a second plurality of entries indicates the protected data is in a plurality of second locations in the frame.

8. The method of any one of claims 1 to 3, wherein using the information to determine the set of locations comprises:
determining a number of entries in the information;
for each entry:
determining an entry size that is used to determine a location of the protected data or the clear data.

9. The method of claim 8, wherein:
a default pattern of the clear data and the protected data is determined, and
the default pattern is used to determine the clear data is in a first location in a frame and the protected data is in one or more second locations in the frame.

10. The method of claim 9, wherein:
the default pattern alternates between the clear data and the protected data,
the clear data is first in the default pattern,
after the entry size of the clear data in the first location is included, the entry size for any other clear data in the default pattern is zero.

11. The method of claim 8, wherein:
a default pattern of the clear data and the protected data is determined, and
the default pattern is used to determine the clear data is in a plurality of first locations in a frame and the protected data is in a plurality of second locations in the frame.

12. The method of claim 11, wherein:
the default pattern alternates between the clear data and the protected data,
the protected data is first in the default pattern, and
a first entry for the entry size of the protected data in the default pattern is zero.

13. A non-transitory computer-readable storage medium having stored thereon computer executable instructions, which when executed by a computing device, cause the computing device to be operable for:
receiving an encoded bitstream;
determining information for the encoded bitstream that was determined during encoding of content, wherein the information follows a syntax to describe protected data of the encoded bitstream;
using the information to determine a set of locations of the encoded bitstream to encrypt;
selectively encrypting a set of first portions of the encoded bitstream that correspond to the protected data based on the set of locations to form an encrypted bitstream, wherein a set of second portions of the encoded bitstream that correspond to clear data is not encrypted; and
outputting the encrypted bitstream.

14. An apparatus comprising:
one or more computer processors; and
a computer-readable storage medium comprising instructions for controlling the one or more computer processors to be operable for:
receiving content;
analyzing a context during encoding of the content to determine locations of protected data and clear data;
determining a syntax to use to determine information describing locations of the protected data in the encoded bitstream;
determining information for a set of locations of the encoded bitstream to encrypt, wherein the information is formatted using the syntax; and
providing the information for the set of locations using a signaling method to an encryption system.

15. The apparatus of claim 14, wherein:
the encryption system selectively encrypts a set of first portions of the encoded bitstream that correspond to the protected data based on the set of locations to form an encrypted bitstream, wherein a set of second portions of the encoded bitstream that correspond to clear data is not encrypted; and/or
wherein analyzing the context for encoding the bitstream comprises:
analyzing header information to determine the locations of the protected data and the clear data; and/or
wherein providing the information for the set of locations using the signaling method comprises:
adding the information for the set of locations in the encoded bitstream, or
adding the information for the set of locations to a channel that is separate from the encoded bitstream.
